# EUROPÄISCHE PATENTSCHRIFT

(11) **EP 1 663 562 B1**
(45) Veröffentlichungstag und Bekanntmachung des Hinweises auf die Patenterteilung: **15.06.2011**
(21) Anmeldenummer: 04761926.7
(22) Anmeldetag: 16.09.2004
(51) Int. Cl.: B23K 11/06, B05B 12/12, G01B 11/06

(54) **DOSENSCHWEISSMASCHINE MIT PULVERMONITOR**
CAN WELDING MACHINE WITH POWDER MONITOR
MACHINE DE SOUDAGE DE BOÎTE AVEC DISPOSITIF DE CONTRÔLE DE POUDRE

(30) Priorität: 16.09.2003 CH 158203
(43) Veröffentlichungstag der Anmeldung: 07.06.2006
(73) Patentinhaber: Soudronic AG, 8962 Bergdietikon (CH)
(72) Erfinder: FEUZ, Urs, CH-8104 Weiningen (CH); BISIG, Thomas, CH-8623 Wetzikon (CH)
(74) Vertreter: Sutter, Kurt
(86) Internationale Anmeldenummer: PCT/CH2004/000586
(87) Internationale Veröffentlichungsnummer: WO 2005/025798

(56) Entgegenhaltungen:
- EP-A- 1 112 801
- US-A- 4 787 749
- US-A- 6 019 504
- PATENT ABSTRACTS OF JAPAN Bd. 0060, Nr. 34 (P-104), 2. März 1982 (1982-03-02) & JP 56 154601 A (NAKATANI TSUGIO), 30. November 1981 (1981-11-30)

## Beschreibung

Die Erfindung betrifft, eine Dasenschweissmaschine nach dem Oberbegriff des Anspruchs 1. Eine solche Dosenschweißmaschine ist aus EP1 112 801 bekannt.

Metalloberflächen werden häufig durch eine Beschichtung geschützt, wenn das Metall bzw. die Legierung selbst nicht genügend korrosionsresistent ist. Dem Fachmann sind zahllose Anwendungen bekannt, bei welchen z.B. Abdeckpulver auf Werkstückoberflächen gesprüht und durch eine anschliessende Wärmebehandlung verfestigt wird. Ueber die Qualität der aufgebrachten Schutzschicht entscheidet die Gieichmässigkait der Schichtdicke, bzw. Fehlstellen in der Abdeckung.

Anstelle von Pulver ist aber auch ein Nasslackauftrag denkbar; weiter können auch Metallbeschichtungen vorgesehen werden.

Z.B. Bleche mit einer schützenden Zinnschicht sind als Weissbleche bekannt und werden u.a. für die Produktion von Dreiteildosen verwendet.

Die Mäntel von Blechverpackungen, insbesondere von Dreiteildosen, werden überwiegend mit Hilfe des Widerstandschweissens hergestellt. Beim Schweissvorgang wird die Zinnschicht am Ort der Schweissnaht entfernt, so dass dort nunmehr ungeschütztes Blechmateriai vorliegt. In einem nachfolgenden Arbeitsgang ist daher die rohe Naht wieder mit einer Schutzschicht zu bedecken. Dies geschieht entweder durch Nasslack oder durch Aufsprühen einer Pulverschicht, welche in einem nachgeschalteten Ofen durch Wärmeeinwirkung zum verfliessen gebracht wird und sich nach der Abkühlung zu einer die gewünschten Eigenschaften aufweisenden Schutzschicht verfestigt. Die Abdeckung der Schweissnaht von Dosenmänteln durch solche Pulverlacke setzt sich vor allem auf der Innenseite der Dosen mehr und mehr durch. Heute erreichbare Schweissgeschwindigkeiten liegen bei 100m/min und mehr, was zu einem entsprechenden Bedarf für geeignete Anlagen der Pulvernahtabdeckung führt.

Die bei der Nahtabdeckung verwendete Pulvermenge stellt in der Dosenproduktion einen relevanten Kostenfaktor dar. Entsprechend wird versucht, die Schichtdicke möglichst dünn zu halten; sie darf jedoch nicht zu dünn werden, um eine Korrosion der Schweissnaht insbesondere bei aggressiven Doseninhalten zuverlässig zu vermeiden, zumal eine monate- oder jahrelange Lagerung der gefüllten Dose vorgesehen sein kann.

Eine mangelhafte Abdeckung der Schweissnaht kann nicht nur zu einer Kontaminierung des Doseninhalts, sondern auch zu einer Leckage führen, bei welcher austretender Doseninhalt die Umgebung verschmutzt.

Es ist bis heute nicht gelungen, die Schichtdicke unter Produktionsbedingungen in einem sehr engen Toleranzbereich konstant zu halten:

Einmal muss das auf die Schweissnaht aufzusprühende Pulver/Luftgemisch über mehrere Meter durch dünne und gebogene Leitungen zur Sprühstelle transportiert werden, was, bedingt durch den langen Transportweg und bezogen auf die einzelne Dose, einen ungleichmässigen Pulveraustrag zur Folge haben kann. Dann wird das Verhalten des Pulvers beeinflusst durch die Pulverkörnung mit unvermeidlich verschiedenen Korndurchmessern. Schliesslich muss das Pulver im Hinblick auf die Haftung am Dosenblech elektrostatisch aufgeladen werden. Der Pulverauftrag wird weiter beeinflusst durch die Produktionsbedingungen vor Ort wie Temperatur, Luftfeuchtigkeit und durch die sich verändernden Eigenschaften von rezikliertem Pulver.

Diese Problematik ist seit langem bekannt und führt dazu, dass die Einstellungen an der Pulvernahtabdeckungsanlage für die aufzunehmende Produktion über Grundwerte vorgenommen wird und die Feineinstellung anhand von Testläufen erfolgt.

Auch bei solchermassen einwandfrei eingestellten Produktionsanlagen kommt es nach einer gewissen Produktionszeit zu einer Verschiebung von Betriebsparametern (Luftfeuchtigkeit, Veränderung des reziklierten Pulvers, wie oben erwähnt). Die Anlage muss nachjustiert werden, was einen Produktionsstopp und weitere Testläufe mit sich bringt.

Bekannte Verfahren zur Überwachung der aufgebrachten Pulvermenge detektieren laufend die zur Sprühstelle geförderte Pulvermenge, was aber nicht mehr als einen Plausibilitätswert ergeben kann.

Wenn versucht wird, mit hinter der Sprühstelle vorgesehenen Sensoren die effektiv vorhandene Schichtdicke laufend zu überprüfen, stellen sich erhebliche Schwierigkeiten im Hinblick auf den zur Verfügung stehenden Raum und die ständige Verschmutzung durch von der Absaugung nicht erfassten Pulverresten. Ein weiteres Problem besteht in der Vibration des Schweissarms, an welchem der Pulverarm mit der Pulversprühstelle und einem Schichtdickensensor notwendigerweise angebracht werden muss.

Der Stand der Technik zur Messung der Pulverschichtdicke ist auch in EP 1 112 801 beschrieben, auf welche hier ausdrücklich Bezug genommen wird. Zur Lösung der oben beschriebenen Probleme wird im genannten Dokument vorgeschlagen, die Schichtdicke der einzelnen Dose über einen Laserstrahl zu messen, wobei die Laserquelle ausserhalb der Nahtabdeckungsanlage angeordnet ist. Damit kann jede einzelne Dose erfasst werden, was gegenüber dem bisherigen System von Stichproben vorteilhaft ist; zudem ist die Verschmutzungsgefahr der Laserquelle und des zugeordneten Sensors erheblich vermindert.

Durch das vorgeschlagene Verfahren können jedoch nur die Eingangsbereiche der einzelnen Dose, nicht aber deren Innenbereich erfasst werden. Letztlich werden nur kleine Teilbereiche der gesamten zu untersuchenden Abdeckung der Schweissnaht überprüft. Fehlstellen in der Abdeckung bleiben unerkannt. Zudem ist die Grösse des Prüfbereichs an den jeweiligen Enden der Dose davon abhängig, wieweit die einzelnen Dosen im Produktionsfluss voneinander entfernt werden können, was einen Kompromiss zwischen dem entsprechenden apparativen Aufwand und der Prüfqualität zur Folge hat.

Aus US 4 787 749 A ist eine Vorrichtung zum Messen einer dünnen Schicht bekannt, die einen Sensor umfasst, der ein Spektroskop aufweist, welches Licht einer Lichtquelle in Komponenten verschiedener Wellenlängen aufteilt. Der Sensor weist ferner ein photoelektrisches Umwandlungselement auf, welches von der Schicht reflektiertes Licht empfängt. Zur Berechnung der Schichtdicke ist ein Rechner vorgesehen.

Es ist Aufgabe der vorliegenden Erfindung, eine Dosenschweissmaschine zu schaffen, mit deren Hilfe die Qualität der aufgebrachten Beschichtung auf einem Werkstück kontinuierlich überwacht werden kann.

Diese Aufgabe wird gelöst durch eine Dosenschweissmaschine gemäss Anspruch 1.

Dadurch, dass die Werkstückoberfläche mit der Deckschicht über eine Vielzahl von Sendern und Empfängern abgetastet wird, ergibt sich ein Abtastbereich von vorwählbarer Grösse, was eine industrielle Anwendung erlaubt. Dadurch, dass Sender und Empfänger miteinander durchmischt am Sensor angeordnet werden, ergibt sich eine gleichbleibende Empfindlichkeit über den gesamten Abtastbereich für Fehlstellen in der Abdeckung in der Art eines Facettenauges, was eine hohe Abtastqualität sicherstellt. Auch zu dünne, das Werkstück nicht mehr vollständig bedeckende Bereiche in der Abdeckung (so z.B., wenn die Werkstückoberfläche durch die Abdeckung durchscheint) werden erkannt: Fehlstellen oder zu dünne Abdeckung erzeugen lokal ein verändertes Reflexionsverhalten der abgetasteten Oberfläche; die unterschiedlich reflektierte Messstrahlung wird durch die Empfänger dem Detektor zugeleitet, und durch den Rechner ein entsprechendes Messsignal erzeugt.

Ueber die gestellte Aufgabe hinaus wird eine Erkennung von nur kleinen Abweichungen vom Sollzustand der Deckschicht ermöglicht. Dadurch, dass die Sender und Empfänger gruppenweise zusammengefasst werden und jede Gruppe ein eigenes Messsignal erzeugt, ergibt sich auch bei kleinen Abweichungen ein für zuverlässige Auswertung genügend starke Abweichung in der reflektierten Strahlung. Probleme in der Verarbeitung von schwachen Signalen, z.B. aufgrund des Signal- Rauschverhältnisses, entfallen.

Diese gruppenweise Aufteilung der Sender und Empfänger erlaubt damit dem Fachmann, die Vorrichtung den gegebenen Bedürfnissen gemäss im Hinblick auf die Grösse des Abtastbereichs und zugleich der Empfindlichkeit für Abweichungen vom Sollzustand der Deckschicht auszulegen.

Durch die Integration der Vorrichtung in den Pulverarm der erfindungsgemässen Dosenschweissmaschine, kann insbesondere die Dicke der Pulverschicht über der Schweissnaht zuverlässig und kontinuierlich, über deren ganze Länge, abgetastet werden (die unmittelbaren Endbereiche der Schweissnaht, am Anfang und am Ende der Dosenzarge, werden beim Einbördeln von Boden und Deckel der Dose umgefalzt und sind von untergeordneter Bedeutung). Eine Verschmutzung des Sensors wird bevorzugt über einen gezielten Reinigungsluftstrom verhindert oder beseitigt.

Es zeigt:
Fig 1 schematisch einen konventionellen Pulverarm, eingebaut in eine Dosenschweissmaschine, mit einer Vorrichtung,
Fig 2 einen vergrösserten Ausschnitt aus Fig 1 mit einem Längsschnitt durch die Vorrichtung
Fig 3 einen vergrösserten Querschnitt durch die Vorrichtung an der Stelle AA von Fig 1; und
Fig 4 schematisch die Verhältnisse im Bereich der Schweissnaht einer Dosenzarge mit einer zu überprüfenden Pulverabdeckung.

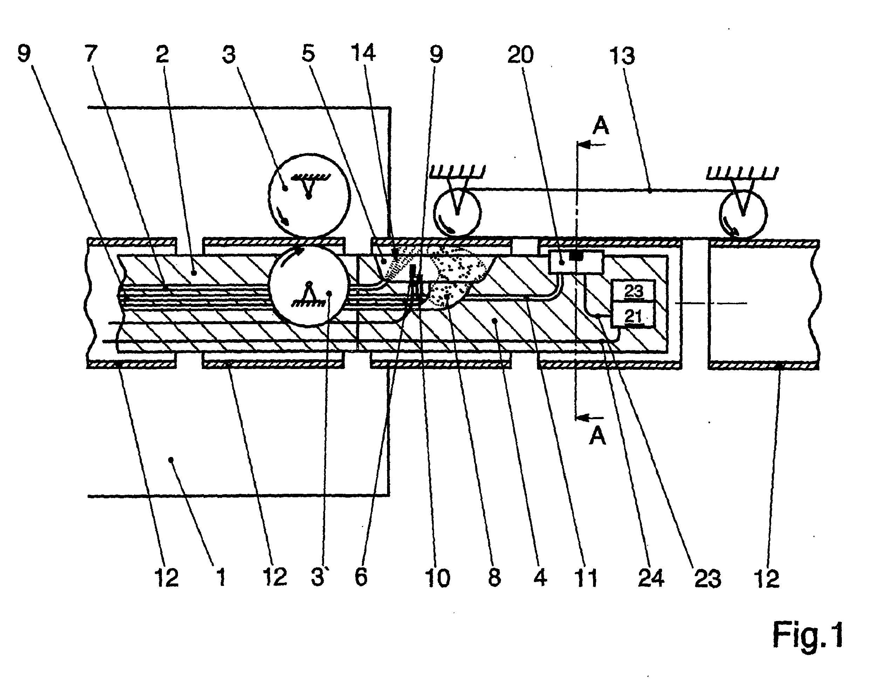

Figur 1 zeigt eine konventionelle Dosenschweissmaschine 1 mit einem Schweissarm 2 und Schweissrollen 3, 3'. Mit dem Schweissarm 2 ist ein Pulverarm 4 verbunden, welcher eine Pulversprühstelle 5 mit einer darin vorgesehenen Elektrode 6 besitzt. Eine Pulverleitung 7 verläuft durch den Schweissarm 2 und den Pulverarm 4 hindurch und mündet in einem Sprühraum 5. Eine Pulverabsaugleitung 8 führt aus dem Sprühraum 5 hinaus und läuft durch den Pulverarm 4 und den Schweissarm 2 zurück. Eine Spülluftleitung 9 läuft ebenfalls durch den Schweissarm 2 und den Pulverarm 4 hindurch und mündet im Bereich der Elektrode 6. Über eine Verzweigung 10 wird diese Leitung als Reinigungsluftleitung 11 fortgesetzt; sie mündet in einem Sensor 20. Weiter ist im Pulverarm 4 eine Steuereinheit 21 mit einem Rechner 22 dargestellt. Quarzfaserleitungen 23 verbinden den Sensor 20 und die Steuereinheit 21; eine Datenleitung 24 verbindet die Steuereinheit mit der zur Entlastung der Figur nicht dargestellten Steuerung der Schweissmaschine 1 und verläuft durch den Pulverarm 4 und den Schweissarm 2. Ebenfalls zur Entlastung der Figur nicht dargestellt sind Stromkabel zum Betrieb der Steuereinheit 21 mit dem Rechner 22. Dosenzargen 12 laufen dem Schweissarm 2 und dem Pulverarm 4 entlang; über ein Auslaufband 13 werden von der Schweissmaschine 1 abgegebene Dosenzargen erfasst, dem Pulverarm 4 entlanggeführt und an den Transport eines nachgeschalteten Ofens abgegeben.

Zur Entlastung der Figur nicht dargestellt ist der Aufbau der Steuereinheit 21 mit dem Rechner 22; der Fachmann kann diese Einheit auf übliche Art konzipieren. In der Einheit 21 werden vorzugsweise die Faserbündel der Leitungen 23, 23', 23", 23"' aufgetrennt, so dass Senderfasern und Empfängerfasern getrennt durch die Messstrahlungsquelle beleuchtet und (Empfängerfasern) mit einem Detektor für reflektierte Messstrahlung betriebsfähig zusammengeschaltet sind. Die Detektoren wiederum werden betriebsfähig mit dem Rechner 22 verbunden, welcher derart ausgebildet ist, dass er aus den Signalen der Detektoren ein Messsignal generiert, welches als Eingangssignal für die Steuerung der Schweissmaschine 1 bzw. des Auswurfs für mangelhafte Dosenzargen in deren Transportweg dienen kann.

Im Betrieb werden auf bekannte Art Weissbleche in der Schweissmaschine 1 gerundet und dem Schweissarm 2 entlanggeführt, wo sie durch die Schweissrollen 3, 3' längs zur Dosenzarge verschweisst werden. Durch den Schweissprozess wird am Ort der Schweissnaht die schützende Zinnschicht entfernt. Während dem Transport der Zargen dem Pulverarm 4 entlang wird am Ort der Pulversprühstelle 5 ein Pulverluftstrom 14 auf die Innenseite der Zarge 12 geblasen, so dass die rohe Schweissnaht durch eine Pulverschicht abgedeckt wird. Über die Elektrode 6 werden die im Pulverluftstrom 14 mit fliegenden Pulverpartikeln aufgeladen, und haften deshalb auf der Zarge. Überschüssiges Pulver-Luftgemisch wird durch die Pulverabsaugleitung 8 aus dem Sprühraum 5 entfernt und rezykliert. Über die Spülluftleitung 9 stetig zugeblasene Spülluft umspült die Elektrode derart, dass sich kein oder möglichst wenig Pulver auf der Elektrode 6 absetzt. Die Verschmutzungsempfindlichkeit der Elektrode 6 ist jedoch trotz stetiger Luftspülung hoch. Die aufgebrachte Pulverschicht wird über den erfindungsgemässen Sensor 20 abgetastet; bei Fehlstellen oder ungenügender Schichtdicke erzeugt die Steuereinheit 21 zusammen mit dem Rechner 22 ein Signal, welches über die Datenleitung 24 der Steuerung der Schweissmaschine 1 (welche zur Entlastung der Figur nicht dargestellt ist) übermittelt wird. Von dort aus wird eine vom Auslaufband 13 aus stromabwärts angeordnete Weiche angesteuert, welche ungenügend beschichtete Dose aus dem Transportweg zum Ofen ausstösst.

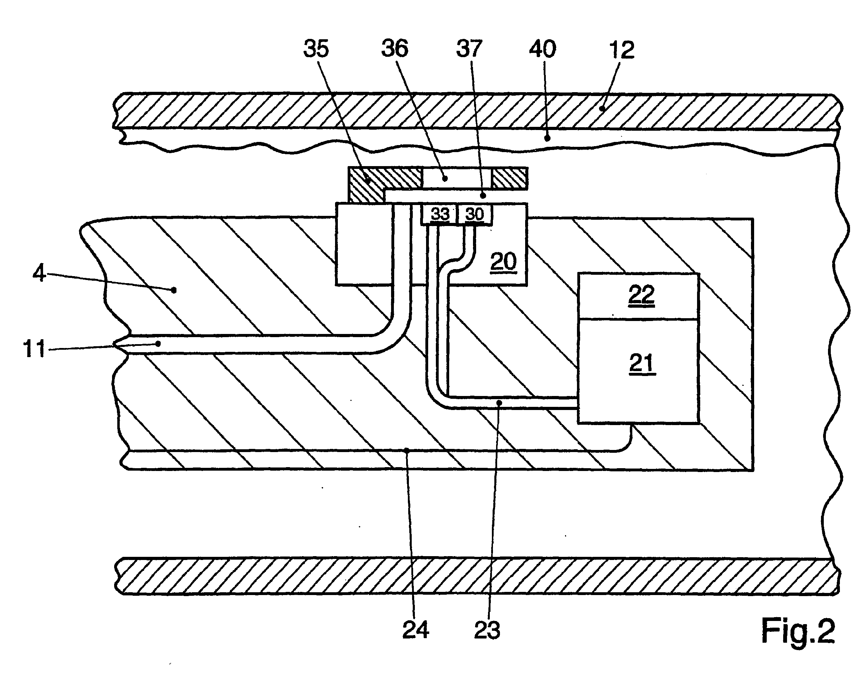

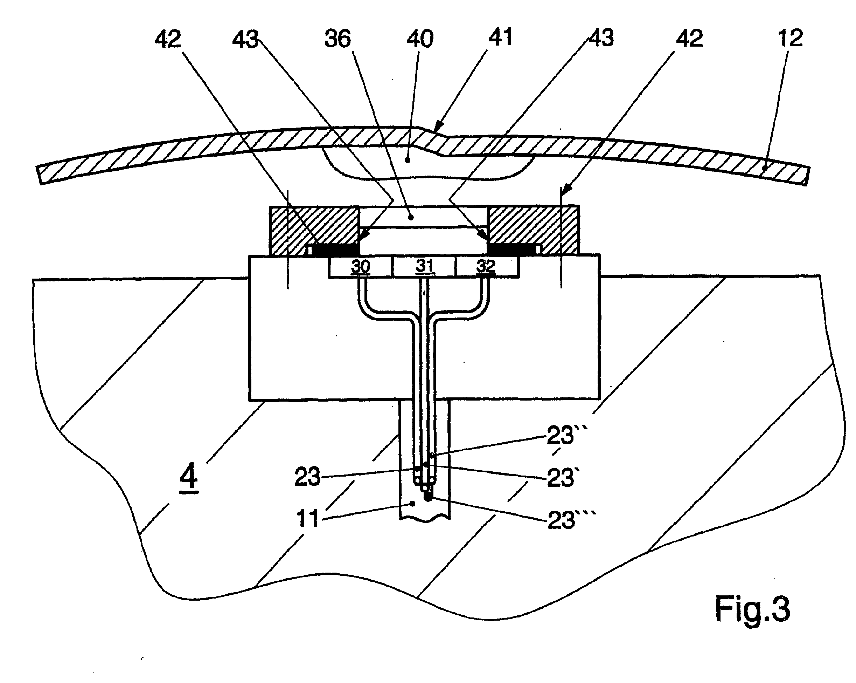

Figur 2 zeigt in einem vergrösserten Ausschnitt den vorderen Bereich des Pulverarms 4 mit dem erfindungsgemässen Sensor 20, der Reinigungsluftleitung 11 und der Steuereinheit für den Sensor 21. Quarzfaserleitungen 23 verbinden die Steuereinheit 21 und den Sensor 20. Die Quarzfaserleitungen 23 münden in an der Sensoroberfläche eingebetteten Abtastsegmenten 30 bzw. 30,31,32 (Figur 3). Die Quarzfaserleitung 23' mündet im Kalibriersegment 33. Eine Abdeckung 35 ist über der Oberfläche des Sensors 20 angeordnet; ersichtlich ist eine Öffnung 36 in der Abdeckung, welche über der wirksamen Sensoroberfläche, gebildet durch die Segmente 30 - 33 (s. auch Figur 3), liegt. Weiter ersichtlich ist ein in der Abdeckung 35 liegender Reinigungsluftkanal 37.

In der Figur ist weiter eine Deckschicht 40 aus ausgesprühtem Pulver dargestellt, welche das Dosenblech bzw. die Schweissnaht abdeckt.

Figur 3 zeigt einen Abschnitt aus dem Pulverarm 4 im Querschnitt entsprechend der Sicht AA von Figur 1. Die Schweissnaht 41 ist durch die verdickte Stelle in der Zarge 12 angedeutet; sie ist durch die Pulverschicht 40 bedeckt. Der Sensor 20 ist mit den Abtastsegmenten 30, 31, 32 der Pulverschicht zugewendet. Die Abdeckung 35 ist and den strichpunktiert angedeuteten Linien 42 vorzugsweise verschraubt. Die Öffnung 36 definiert den Wirkbereich der Abtastsegmente 30, 31, 32 ; dieser ist etwas enger gehalten, als es der Breite der Pulverschicht 40 entspricht. Dichtungselemente 42 fluchten mit den Wänden 43 der Öffnung 36 und grenzen dadurch den durch die Öffnung 36 definierten Wirkbereich des Sensors 20 auf den Abtastsegmenten scharf ab.

Quarzfaserkabel 23, 23' ,23" führen Bündel von Quarzfasern, welche sensorseitig in die Abtastsegmente 30, 31, 32 geführt und auf der Seite der Steuereinheit 21 mit dieser betriebsfähig verbunden sind. Jedes Quarzfaserbündel einer Leitung 23, 23', 23" ist sensorseitig im jeweiligen Abtastsegment 30, 31, 32 aufgefächert derart festgelegt, dass die gesamte Rechteckfläche jedes Abtastsegments gleichmässig mit Faserenden besetzt ist.

Das in der Figur nicht dargestellte Kalibriersegment 33 liegt hinter den Segmenten 30, 31, 32, ist durch diese verdeckt, und sensorseitig mit dem Quarzfaserkabel 23"' verbunden. Das Faserbündel der Leitung 23'" ist ebenfalls im Kalibriersegment 33 gleichmässig aufgefächert, und bedeckt mit seinen Enden dessen gesamte der Zarge 12 zugewendete Oberfläche. Die Quarzfaserleitung 23'" ist mit dem anderen Ende mit der Steuereinheit 21 verbunden.

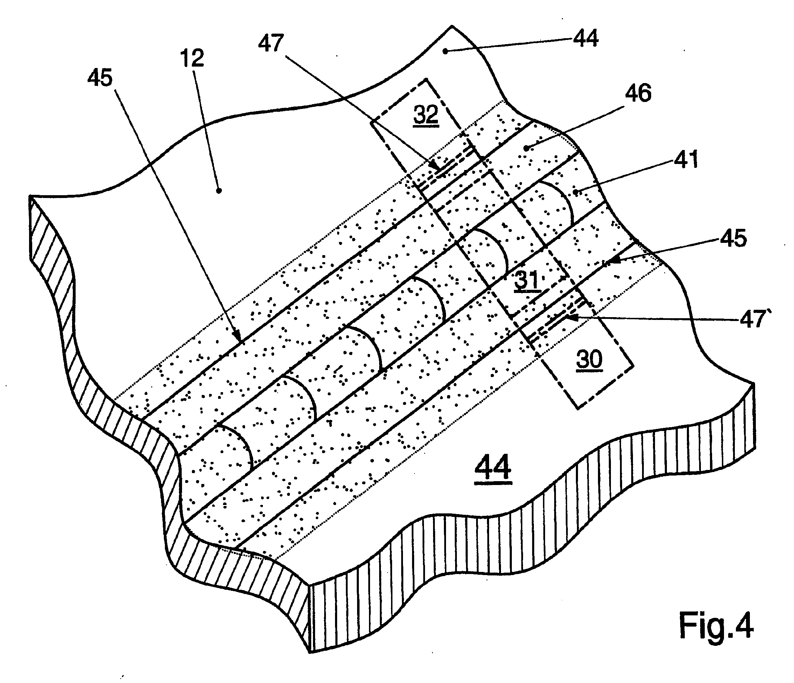

Figur 4 zeigt einen Ausschnitt aus der Wand der Zarge 12 am Ort der Schweissnaht 41.

Weiter dargestellt ist eine Innenlackierung 44 der Zarge 12, wie sie häufig in den Dosenproduktion Verwendung findet. Diese Innenlackierung 44 erstreckt sich gegen die Schweissnaht bis zu ihrem Rand 45, so dass zu verschweissende Bereiche der Dosenzarge frei von Lack sind.

Ebenfalls ersichtlich ist ein pulverbedeckter Bereich 46, in der Figur punktiert angedeutet, der einen Pulverstreifen darstellt, wie er zur Abdeckung der rohen Schweissnaht aufgebracht wird.

Die Figur zeigt weiter den auf die Zargenoberfläche projizierten Umriss der Segmente 30, 31, 32, als gestrichelte Linie 50; die Segmente befinden sich ca. 6 - 8 mm senkrecht über der Oberfläche der Zarge 12. Aus der Figur ist ersichtlich, dass die Messbreite der Abtastsegmente 30, 31, 32 die Breite des Pulverstreifens 46 übersteigt; mit der vorliegenden Konfiguration wären, je nach Abmessungen der Öffnung 36, noch breitere Pulverstreifen erfassbar. Die Öffnung 36 selbst ist ebenfalls als Projektion durch Doppelstriche 47, 47' dargestellt. Dadurch, dass die Breite der Öffnung 36 (Doppelstriche 47, 47') kleiner gewählt ist als die Breite des Pulverstreifens 46, ist sichergestellt, dass eine Messung über den Rand der Pulverabdeckung 46 hinaus nicht erfolgt und so Fehlermeldungen an einem Ort, wo kein Pulver sein soll, unterbleiben.

Der erfindungsgemässe Sensor 20 arbeitet mit der Steuereinheit 21 wie folgt zusammen:

Die Steuereinheit besitzt für jede der Leitungen 23, 23', 23" eine Quelle für Messstrahlung (oder eine Quelle, welche auf alle Leitungen wirkt). Die Messstrahlung wird durch die Faserbündel dem jeweiligen Segment 30, 31, 32 zugeleitet und tritt dort an den Faserenden aus. Durch die gleichmässige Verteilung der Faserenden im jeweiligen Abtastsegment (30, 31, 32) ergibt sich eine gleichmässige Ausleuchtung der Pulverschicht 40.

Die Messstrahlung wird an der körnigen Oberfläche der Pulverschicht 40 gestreut und nur zu einem geringen Grad in den Bereich der Abtastsegmente zurück reflektiert. In den Abtastsegmenten 30, 31, 32 sind nun weitete Quarzfasern eingelassen, welche ebenfalls in den Leitungen 23, 23', 23" gebündelt zur Steuereinheit 21 geführt werden. Durch diese weiteren Fasern kann reflektierte Messstrahlung in den Segmenten 30, 31, 32 empfangen und einem Detektor, je für die Leitung 23, 23', 23" zugeleitet werden.

Je nach der Dicke der Pulverschicht 40 ändert sich die Reflexion der Messstrahlung; besitzt die Abdeckung Lücken, ist die Reflexion maximal. Diese reflektierten Strahlen erzeugen im jeweiligen Detektor in der Steuereinheit 21 ein Signal, welches durch den Rechner 22 verarbeitet wird. Wird eine im Rechner 22 eingegebene Schwelle überschritten, generiert dieser eine Auswurfsignal, welches durch die Datenleitung 24 der Steuerung der Schweissmaschine 1 zugeleitet wird und den Auswurf der mangelhaft beschichteten Dose bewirkt.

Jede Faser, die Messstrahlung abgibt, entspricht einem Sender für Messstrahlung; jede Faser, die reflektierte Messstrahlung aufnehmen kann, ist ein Empfänger für reflektierte Messstrahlung. Die gleichmässige Verteilung der Sender erzeugt eine gleichmässige Ausleuchtung der abzutastenden Oberfläche; es ist nun wichtig, dass die Empfänger ebenfalls gleichmässig über die Oberfläche der Abtastsegmente angeordnet sind. Im Ergebnis sind Sender- und Empfängerfasern gleichmässig durchmischt in den Abtastsegmenten angeordnet. Die Abtastsegmente werden deshalb mit gleichbleibender Abtastqualität über die gesamte durch die Öffnung 36 definierte Abtastbreite Fehlstellen in der Pulverschicht 40 über die veränderte Reflexion der Messstrahlung wahrnehmen.

Die reflektierte Messstrahlung wird entsprechend über das gesamte jeweilige Abtastsegment 30, 31, 32 ermittelt und in einer Gesamtintensität pro Segment an den jeweiligen Detektor in der Steuereinheit 21 weitergeleitet. Es folgt, dass bei einem breiten Abtastsegment eine kleine Fehlstelle zu einer vergleichsweise geringen Intensitätsänderung der reflektierten Messstrahlung führt, während umgekehrt bei einem kleinen Abtastsegment dieselbe Fehlstelle zu einer grösseren Schwankung der reflektierten Messstrahlung führt. Es ist nun wünschenswert, die Intensitätsschwankung der reflektierten Messstrahlung nicht unter eine untere Schwelle fallen zu lassen, damit die Detektoren der Steuereinheit 21 und der zugeordnete Rechner 22 leicht verarbeitbare Signale empfangen, welche z.B. einen genügend grossen Signalrauschabstand aufweisen. Erfindungsgemäss kann der Fachmann, ausgehend von der Grösse der noch zu erkennenden Fehlstellen und der Fähigkeit der Steuereinheit 21 zur Unterscheidung von Intensitätssignalen, die maximalen Abmessungen der Abtastsegmente bestimmen oder auch, für gegebene Segmente, die minimal noch erkennbaren Fehlstellen benennen.

Entsprechend zeigt Figur 3 Abtastsegmente von 6 mm Länge, welche für einen Messbereich von ca. 12 mm Breite genügen. Damit können Fehlstellen ab ca. 8.0 mm Durchmesser zuverlässig erkannt werden.

Vorzugsweise werden Fasern mit einem kleinen Durchmesser von 20µm 200µm verwendet, besonders eignet sich ein Durchmesser von 50µm.

Als Messstrahlung wird vorzugsweise Infrarotlicht verwendet, welches tageslicht unabhängig und damit unabhängig von den jeweiligen Produktionsbedingungen arbeitet. Es kann aber auch andere Messstrahlung verwendet werden, je nach Beschaffenheit der Abdeckung bzw. der darunter liegenden Werkstückoberfläche. Relevant bei der Auswahl der Art der Messstrahlung ist möglichst unterschiedliches Reflexionsverhalten bei der Abdeckung und bei der Werkstückoberfläche. Bei anderer Messstrahlung als Infrarotstrahlung kann der Fachmann eine optimale strahlungsleitende Faser bestimmen; die Quarzfaser ist für den iInfrarotbereich besonders geeignet.

Soll die Pulverabdeckung einer Dosennaht überprüft werden, kann das Reflexionsverhalten der Schweissnaht verbessert (und damit der Kontrast zur streuenden Pulverschicht erhöht) werden, indem der Schweissprozess unter Zuführung von Schutzgas ausgeführt wird.

Figur 2 zeigt ein Kalibriersegment 33, welches über die Leitung 23'" von der Steuereinheit 21 mit vorzugsweise Weisslicht betrieben wird. Soll die Nahtabdeckungsanlage für die Produktion eingerichtet werden, kann der Operateur das Kalibriersegment aktivieren und erkennt durch die Beleuchtung den Abtastbereich auf der Dose. Danach kann mit einer Testdose, welche einwandfreie Beschichtung aufweist, das Reflexionsverhalten der Messstrahlung ermittelt und so die nötigen Schwellwerte in den Rechner 22 eingegeben werden.

Die Anordnung von Figur 3 zeigt drei in Linie nebeneinander angeordnete Abtastsegmente; es kann eine beliebige Anzahl solcher Semente nebeneinadergeschaltet werden, was zu einer beliebigen Breite des Abtastbereichs führt. So können die Segmente auch den gesamten Umfang der Dose abtasten, was z.B. ermöglicht, die Beschichtung bei einer Vollausspritzung zu prüfen.

Ebenfalls kann bei einer weiteren Ausführungsform vorgesehen werden, die Segmente in Vorschubrichtung zu einander versetzt anzuordnen, was den mechanischen Aufbau der Prüfeinrichtung erleichtert.

## Patentansprüche

1. Dosenschweissmaschine mit einer Nahtabdeckungsanlage mit einer Vorrichtung zum kontinuierlichen Messen der Dicke einer Pulverschicht (40) eines gegenüber der Vorrichtung relativbewegten Dosenblechs, wobei die Pulverschicht (40) der Abdeckung des Dosenblechs dient, wobei die Vorrichtung einen Sensor (20) mit einer Vielzahl von Sendern für Messstrahlung und mit einer Vielzahl von Empfängern für von der Pulverschicht (40) und/oder dem Werkstück reflektierte Messstrahlung aufweist, wobei Sender und Empfänger miteinander durchmischt am Sensor (20) angeordnet und ein Rechner (22) für die Generierung eines kontinuierlichen Messsignals in Abhängigkeit von den beiden Parametern ausgesendete Strahlung und empfangene Strahlung vorgesehen ist, **dadurch gekennzeichnet, dass** die Vorrichtung zum kontinuierlen Messen der Dicke der Pulverschicht in einen Pulverarm integriert ist, und dass nebeneinander liegende Sender und Empfänger gruppenweise zusammengefasst sind, derart, dass jeder Gruppe eine eigene Quelle für Messstrahlung und ein eigener Detektor für in die Empfänger gelangte Strahlung zugeordnet ist, und dass weiter jeder Gruppe ein eigener Rechner zur Bildung eines Messsignals zugeordnet ist, wobei die Sender und Empfänger in einem Sensorkopf (20) angeordnet und durch strahlungsleitende Fasern, vorzugsweise Quarzfasern, mit der zugehörigen Strahlungsquelle bzw. dem zugehörigen Detektor verbunden sind, wobei am Sensorkopf eine auswechselbare Abdeckung (35) für die Begrenzung der Messbreite des Sensors (20) vorgesehen ist, welche Reinigungsmittel (37) zum Schutz der wirksamen Sensoroberfläche aufweist, wobei die zugehörige Strahlungsquelle bzw. der zugehörige Detektor betriebsfähig mit einem Rechner (22) zur Generierung eines Messsignals verbunden sind.

2. Dosenschweissmaschine nach Anspruch 1, **dadurch gekennzeichnet, dass** die Sender mit der Strahlungsquelle und/oder die Empfänger mit dem Detektor über strahlungsleitende Fasern, vorzugsweise Quarzfasern, verbunden sind.

3. Dosenschweissmaschine nach Anspruch 1 oder 2, **dadurch gekennzeichnet, dass** der Sensor (20) Mittel (37) aufweist, Verunreinigungen der wirksamen Sensoroberfläche zu entfernen und fernzuhalten.

4. Dosenschweissmaschine nach einem der vorhergehenden Ansprüche 1 bis 3, **dadurch gekennzeichnet, dass** die Strahlungsquelle Infrarotstrahlung erzeugt.

5. Dosenschweissmaschine nach einem der vorhergehenden Ansprüche, **dadurch gekennzeichnet, dass** die Reinigungsmittel einen über die wirksame Sensoroberfläche verlaufenden Spühlluftkanal (37) aufweisen, dessen Decke im Bereich der Sender und Empfänger durchbrochen ist.

6. Dosenschweissmaschine nach einem der vorhergehenden Ansprüche, **dadurch gekennzeichnet, dass** die strahlungsleitenden Fasern einen Durchmesser von 20 bis 200 µm, vorzugsweise 50 µm aufweisen.

7. Dosenschweissmaschine nach einem der vorhergehenden Ansprüche, **dadurch gekennzeichnet, dass** der Sensorkopf (20) drei Gruppen (30, 31, 32) von Sendern und Empfängern aufweist, welche in Linie angeordnet sind.

8. Dosenschweissmaschine nach einem der vorhergehenden Ansprüche, **dadurch gekennzeichnet, dass** der Sensorkopf (30) eine vierte Gruppe (33) mit nur Sendern aufweist, welche über strahlungsleitende Fasern mit einer Quelle von vorzugsweise Weisslicht verbunden ist.

## Claims

1. Can welding machine with a seam covering apparatus with an apparatus for continuous measuring of the thickness of a powder layer (40) of a can sheet metal moved relatively to the apparatus, wherein the powder layer (40) serves as covering of the can sheet metal, wherein the apparatus has a sensor (20) with a plurality of senders for measuring radiation and with a plurality of receivers for measuring radiation reflected from the powder layer (40) and/or the workpiece, wherein senders and receivers are arranged at the sensor (20) intermixedly with one another and a computer (22) is provided for generating a continuous measuring signal in dependence on the two parameters emitted radiation and received radiation, **characterized in that** the apparatus for continuous measuring of the thickness of the powder layer is integrated into a powder arm, and that senders and receivers that lie next to one another are combined in groups such that each group is assigned its own source for measurement radiation and its own detector for radiation reaching the receivers, and that furthermore each group is assigned its own computer for the forming a measuring signal, wherein the senders and receivers are arranged in a sensor head (20) and are connected with the associated radiation source and the associated detector, respectively, by way of radiation-conducting fibres, preferably quartz fibres, wherein at the sensor head is provided an exchangeable cover (35) for the limiting of the measuring width of the sensor (20), which has cleaning means (37) for protection of the effective sensor surface, wherein the associated radiation source and the associated detector, respectively, are operably connected with a computer (22) for generating a measuring signal.

2. Can welding machine according to claim 1, **characterized in that** the senders are connected with the measuring source and/or the receivers are connected with the detector by way of radiation-conducting fibres, preferably quartz fibres.

3. Can welding machine according to claim 1 or 2, **characterized in that** the sensor (20) has means (37) for removing contaminations from and for keeping contaminations off the effective sensor surface.

4. Can welding machine according to one of the preceding claims 1 to 3, **characterized in that** the radiation source generates infrared radiation.

5. Can welding machine according to one of the preceding claims, **characterized in that** the cleaning means have a spray air channel (37) that runs across the effective sensor surface, whose cover is penetrated in the region of the senders and receivers.

6. Can welding machine according to one of the preceding claims, **characterized in that** the radiation-conducting fibres have a diameter of 20 to 200 µm, preferably 50 µm.

7. Can welding machine according to one of the preceding claims, **characterized in that** the sensor head (20) has three groups (30, 31, 32) of senders and receivers that are arranged on a line.

8. Can welding machine according to one of the preceding claims, **characterized in that** the sensor head (30) has a fourth group (33) with only senders that is connected with a source of preferably white light by way of radiation-conducting fibres.

## Revendications

1. Machine de soudure de boîtes avec une installation de recouvrement de soudure, comprenant un dispositif pour mesurer en continu l'épaisseur d'une couche de poudre (40) d'une tôle de boîte se déplaçant par rapport au dispositif, dans laquelle la couche de poudre (40) sert au recouvrement de la tôle de boîte, dans laquelle le dispositif présente un capteur (20) avec une pluralité d'émetteurs pour un rayonnement de mesure et avec une pluralité de récepteurs pour le rayonnement de mesure réfléchi par la couche de poudre (40) et/ou la pièce d'ouvrage, dans laquelle les émetteurs et les récepteurs sont disposés, mélangés les uns aux autres, sur le capteur (20) et un ordinateur (22) est prévu pour la génération d'un signal de mesure continu en fonction du rayonnement émis et du rayonnement reçu par les deux paramètres, **caractérisée en ce que** le dispositif pour mesurer en continu l'épaisseur de la couche de poudre est intégré à un bras pour l'apport de poudre et **en ce que** des émetteurs et des récepteurs positionnés l'un à côté de l'autre sont rassemblés en groupes de sorte qu'une source propre pour le rayonnement de mesure et un détecteur propre pour le rayonnement arrivé dans les récepteurs est attribué à chaque groupe et de sorte qu'un ordinateur propre pour la formation d'un signal de mesure est également attribué à chaque groupe, les émetteurs et les récepteurs étant disposés dans une tête de capteur (20) et reliés par des fibres conductrices de rayonnement, de préférence des fibres de quartz, à la source de rayonnement correspondante ou au détecteur correspondant, un recouvrement échangeable (35) étant prévu sur la tête de capteur pour délimiter la largeur de mesure du capteur (20), lequel présente des moyens de nettoyage (37) pour la protection de la surface active du capteur, la source de rayonnement correspondante ou le détecteur correspondant étant relié(e) de façon opérationnelle à un ordinateur (22) pour générer un signal de mesure.

2. Machine de soudure de boîtes selon la revendication 1, **caractérisée en ce que** les émetteurs sont reliés à la source de rayonnement et/ou les récepteurs au détecteur par le biais de fibres conductrices de rayonnement, de préférence de fibres de quartz.

3. Machine de soudure de boîtes selon la revendication 1 ou 2, **caractérisée en ce que** le capteur (20) présente des moyens (37) pour éliminer et éloigner des impuretés de la surface active du capteur.

4. Machine de soudure de boîtes selon l'une quelconque des revendications précédentes 1 à 3, **caractérisée en ce que** la source de rayonnement génère du rayonnement infrarouge.

5. Machine de soudure de boîtes selon l'une quelconque des revendications précédentes, **caractérisée en ce que** les moyens de nettoyage présentent un canal d'air de rinçage (37) passant au-dessus de la surface active du capteur et dont le plafond est ajouré dans la zone des émetteurs et des récepteurs.

6. Machine de soudure de boîtes selon l'une quelconque des revendications précédentes, **caractérisée en ce que** les fibres conductrices de rayonnement présentent un diamètre de 20 à 200 µm, de préférence de 50 µm.

7. Machine de soudure de boîtes selon l'une quelconque des revendications précédentes, **caractérisée en ce que** la tête de capteur (20) présentent trois groupes (30, 31, 32) d'émetteurs et de récepteurs, qui sont disposés en ligne.

8. Machine de soudure de boîtes selon l'une quelconque des revendications précédentes, **caractérisée en ce que** la tête de capteur (30) présente un quatrième groupe (33) comportant uniquement des émetteurs, qui est relié, par le biais de fibres conductrices de rayonnement, à une source émettrice de lumière blanche, de préférence.
